(19) Europäisches Patentamt
European Patent Office
Office européen des brevets

(11) Veröffentlichungsnummer: **0 100 297**
**B1**

(12) # EUROPÄISCHE PATENTSCHRIFT

(45) Veröffentlichungstag der Patentschrift: **08.01.86**

(51) Int. Cl.⁴: **C 09 B 45/26,** C 09 B 55/00 // C09B33/04, D06P1/10

(21) Anmeldenummer: **83810285.3**

(22) Anmeldetag: **27.06.83**

(54) **Bis-1:2-chromkomplexe von Disazofarbstoffen, deren Herstellung und Verwendung.**

(30) Priorität: **02.07.82 CH 4052/82**

(43) Veröffentlichungstag der Anmeldung: **08.02.84 Patentblatt 84/6**

(45) Bekanntmachung des Hinweises auf die Patenterteilung: **08.01.86 Patentblatt 86/2**

(84) Benannte Vertragsstaaten: **CH DE FR GB IT LI**

(56) Entgegenhaltungen:
**EP-A-0 009 466**
**EP-A-0 082 117**
**FR-A-2 270 302**

(73) Patentinhaber: **CIBA-GEIGY AG, Klybeckstrasse 141, CH-4002 Basel (CH)**

(72) Erfinder: **Back, Gerhard, Dr., Hammerstrasse 5, D-7850 Lörrach (DE)**

**EP 0 100 297 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

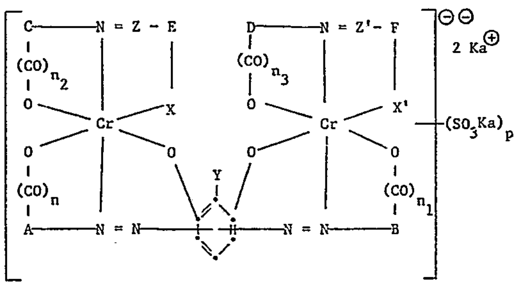

(I)

worin

Z und Z' unabhängig voneinander je Stickstoff oder eine −CH-Gruppe,

X und X' unabhängig voneinander Sauerstoff oder eine Gruppe der Formel −NR−, worin R Wasserstoff oder $C_1$-$C_4$-Alkyl bedeutet, wobei X bzw. X' Sauerstoff sein müssen, wenn Z bzw. Z' die −CH-Gruppe bedeutet,

A und B unabhängig voneinander je den Rest einer Diazokomponente der Benzol- oder Naphthalinreihe, welcher die Hydroxy- oder Carboxygruppe in o-Stellung zur Azogruppe trägt,

C und D unabhängig voneinander je einen Rest der Benzol- oder Naphthalinreihe, welcher in o-Stellung zur Azo- oder Azomethingruppe eine Hydroxy- oder Carboxygruppe trägt, oder, falls $n_2$ und/oder $n_3$ = 1 ist und Z eine −CH-Gruppe darstellt, den Rest einer aliphatischen, cycloaliphatischen oder aromatischen Aminocarbonsäure,

E und F unabhängig voneinander je den Rest einer Kupplungskomponente, wenn Z Stickstoff ist, wobei die Kupplungskomponente in o- bzw. α-Stellung zur Azogruppe die Gruppe X bzw. X' enthält oder den Rest eines o-Hydroxyaldehyds, wenn Z die −CH-Gruppe darstellt,

Y $C_1$-$C_4$-Alkyl oder Wasserstoff, n, $n_1$, $n_2$ und $n_3$ unabhängig voneinander je 0 oder 1, p eine ganze Zahl von 1 bis 6, und

$Ka^+$ ein Kation bedeuten.

In den erfindungsgemässen Chromkomplexfarbstoffen der obigen Formel I können die Reste A, B, C und D noch einen oder mehrere weitere Substituenten tragen, z. B. niedermolekulares Alkyl oder Alkoxy, Halogen, wie z. B. Chlor oder Brom, Nitro, Cyano, Sulfo, Carboxy, Phosphono, Alkylsulfonyl, wie z. B. Methylsulfonyl, Sulfamide, wie z. B. Sulfamid oder N-Methylsulfamid, oder Acylamino. Unter niedermolekularen Alkyl- oder Alkoxygruppen sind in dieser Anmeldung generell solche mit 1 bis 6, vorzugsweise 1 bis 2 C-Atomen zu verstehen und mit Acylamino werden niedrigmolekulare Alkanoylamino-, Alkylsulfonylamino- und Alkoxycarbonylaminoreste sowie Sulfonylamino-, Aroylamino- und Arylsulfonylaminoreste bezeichnet.

Die Reste A, B, C und D leiten sich beispielsweise von folgenden Aminen ab: Anthranilsäure, 4- oder 5-Chloranthranilsäure, 4- oder 5-Sulfoanthranilsäure, 2-Amino-3-naphthoesäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-, 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Sulfonamido-2-amino-1-hydroxybenzol, 1-Hydroxy-2-aminobenzol-4-sulfoanthranilid, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 2-Amino-1-hydroxybenzol-4- oder -5-sulfonsäure, 4-Nitro-2-amino-1-hydroxybenzol-6-sulfosäure, 5-Nitro- oder 6-Nitro-2-amino-1-hydroxybenzol-4-sulfosäure, 4-Chlor-2-amino-1-hydroxybenzol-6-sulfosäure, 1-Amino-2-hydroxynaphthalin-4-sulfosäure, 1-Amino-2-hydroxy-6-nitronaphthalin-4-sulfosäure, 1-Amino-2-hydroxy-6-chlornaphthalin-4-sulfosäure, 1-Amino-2-hydroxynaphthalin-4,6-disulfosäure, 2-Amino-1-hydroxybenzol-4,6-disulfosäure.

Statt der oben genannten Amine mit Hydroxygruppe kommen für A, B, C und D auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-sulfosäure, oder tosyliertes 1-Hydroxy-2-aminobenzol, wobei die Methoxy- oder O-Tosylgruppe vor oder bei der Metallisierung in eine OH-Gruppe umgewandelt wird. Verbindungen mit diesen Gruppen werden vor allem dann eingesetzt, wenn die entsprechenden 1-Hydroxy-2-aminoverbindungen schlecht kuppeln.

Ausserdem können C und/oder D, falls $n_2$ und/oder $n_3$ gleich 1 ist und Z eine −CH-Gruppe darstellt, auch den Rest einer aliphatischen oder cycloaliphatischen Aminosäure darstellen. Geeignete Aminosäuren sind z. B.: Glykokoll, α-Alanin, β-Alanin, Phenlyglycin, Phenylalanin, 2-Aminocyclohexancarbonsäure.

In bevorzugten Farbstoffen sind A, B, C und D unabhängig voneinander je der Rest eines 1-Hydroxy-2-aminobenzols, welcher ggf. durch Halogen, Nitro, Sulfo oder niedrigmolekulares Alkyl oder Alkoxy substituiert ist, oder der Rest eines 1-Amino-2-hydroxy-4-sulfonaphthalins, welcher ggf. in 6-Stellung durch Halogen, wie Brom oder insbesondere Chlor, Nitro oder Sulfo substituiert ist.

Die Reste E und F leiten sich vorzugsweise von folgenden Gruppen von Kupplungskomponenten ab: ggf. durch niedermolekulares Alkyl oder Alkoxy, Dialkylamino, oder Acylamino substituierte, in o-Stellung kuppelnde Phenole, wobei Acylamino $C_1$-$C_4$-Alkanoylamino-, $C_1$-$C_4$-Alkylsulfonylamino-, $C_1$-$C_4$-Alkoxycarbonylamino- Aroylamino- oder Arylsulfonylaminoreste bedeutet; Naphthole, die ggf. mit $C_1$-$C_4$-Alkyl oder Alkoxy, Chlor, Amino, Acylamino oder Sulfo substituiert sind, wobei Acylamino dieselbe Bedeutung hat, die vorne angegeben ist; 5-Pyrazolone oder 5-Aminopyrazole, die in 1-Stellung einen ggf. mit

Chlor, Nitro, $C_1$-$C_4$-Alkyl- oder Alkoxygruppen oder Sulfogruppen substituierten Phenyl- oder Naphthylrest besitzen und in 3-Stellung eine $C_1$-$C_4$-Alkyl- oder Carboxygruppe, insbesondere eine Methylgruppe aufweisen: Naphthylamine, die ggf. mit Sulfo-, Sulfonamido- oder Sulfongruppen substituiert sind; Acetessigsäureamide, vor allem Acetessigsäureanilide, und Benzoylessigsäureanilide, die im Anilidkern ggf. mit Chlor, Brom, Nitro, $C_1$-$C_4$-Alkyl- oder Alkoxy- oder Sulfogruppen substituiert sein können; 6-Hydroxy-3-cyano- oder 6-Hydroxy-3-carbonamido-4-alkyl-2-pyridone, die in 1-Stellung durch ggf. substituiertes $C_1$-$C_4$-Alkyl, z.B. Methyl, Isopropyl, β-Hydroxyethyl, β-Aminoethyl oder γ-Isopropoxypropyl oder durch Phenyl substituiert sind, und in 4-Stellung eine $C_1$-$C_4$-Alkylgruppe, insbesondere Methyl, tragen können, oder Hydroxychinoline.

Beispiele solcher Kupplungskomponenten sind:

2-Naphthol, 1-Naphthol, 1-Acetylamino-7-naphthol, 1-Propionylamino-7-naphthol, 1-Carbomethoxyamino-7-naphthol, 1-Carboethoxyamino-7-naphthol, 1-Carbopropoxyamino-7-naphthol, 6-Acetyl-2-naphthol, 2-Naphthol-3-, -4-, -5-, -6-, -7- oder -8-sulfosäure, 1-Naphthol-3-, -4- oder -5-sulfosäure, 4-Methyl-1-naphthol, 4-Methoxy-1-naphthol, 4-Acetyl-1-naphthol, 5,8-Dichlor-1-naphthol, 5-Chlor-1-naphthol, 2-Naphthylamin, 2-Naphthylamin-1-sulfosäure, 1-Naphthylamin-4- oder -5-sulfosäure, 2-Aminonaphthalin-6-sulfosäure, 2-Aminonaphthalin-5-sulfosäure, 6-Methylsulfonyl-2-aminonaphthalin, 1-Phenyl-3-methylpyrazol-5-on, 1-Phenyl-5-pyrazolon-3-carbonsäureamid, 1-(2'-, 3'- oder 4'-Methylphenyl)-3-methylpyrazol-5-on, 1-(2',3'- oder 4'-Sulfophenyl)-3-methylpyrazol-5-on, 1-(2'-Chlor-5'-sulfophenyl)-3-methylpyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2',5'- oder 3',4'-Dichlorphenyl)-3-methylpyrazol-5-on, 1-(2',5'-Dichlor-4'-sulfophenyl)-3-methylpyrazol-5-on, 1-(2',3'- oder 4'-Sulfophenyl)-3-methyl-5-aminopyrazol, 1-Phenyl-3-methyl-5-aminopyrazol, 1-(2'-Chlor-5'-sulfophenyl)-3-methyl-5-aminopyrazol, Acetoacetanilid, Acetoacetanilid-4-sulfosäure, Acetoacet-o-anisidid, Acetoacet-o-toluidid, Acetoacet-o-chloranilid, Acetoacet-m-xylidid, Tetralol, 4-Methylphenyl, 3-Dialkylaminophenole, besonders 3-Dimethylamino- und 3-Diethylaminophenol, 4-Butylphenol, vorzugsweise 4-tert.-Butylphenol, 4-Amylphenol, insbesondere 4-t-Amylphenol, 2-Isopropyl-4-methylphenol, 2- oder 3-Acetylamino-4-methylphenol, 2-Methoxycarbonylamino-4-methylphenol, 2-Ethoxycarbonylamino-4-methylphenol und 3,4-Dimethylphenol, 1-Methyl-3-cyano-4-ethyl-6-hydroxypyridon, 1-Methyl-3-cyano-4-methyl-6-hydroxypyridin, 1-Phenyl-3-carbonamido-4-methyl-6-hydroxypyridon, 1-Ethyl-4-hydroxy-2-chinolon.

Vorzugsweise stellen die Kupplungskomponenten E und F unabhängig voneinander je ein ggf. durch Amino und/oder Sulfo substituiertes 1- oder 2-Naphthol, 1- oder 2-Naphthylamin, ggf. substituiert durch Sulfo, p-Alkyl($C_1$-$C_6$)-phenol, 1-Phenyl-3-methyl-5-pyrazolon oder Acetessigsäureanilid dar, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

Sofern Z und/oder Z' die −CH-Gruppe ist, stellt E und/oder F den Rest eines o-Hydroxyaldehyds dar, vorzugsweise eines o-Hydroxybenzaldehyds oder o-Hydroxynaphthaldehyds, welcher durch niedrigmolekulares Alkyl, Halogen, Sulfo, Phenylazo, Sulfophenylazo, Naphthylazo, Sulfonaphthylazo oder Sulfophenylazophenylenazo substituiert sein kann. Geeignete Aldehyde sind beispielsweise:

2-Hydroxy-1-naphthaldehyd, 1-Hydroxy-2-naphthaldehyd, 2-Hydroxybenzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, 5-(Phenylazo)-2-hydroxybenzaldehyd, 5-(2'-, 3'- oder 4'-Sulfophenylazo)-2-hydroxybenzaldehyd, 5-(6'-Sulfonaphthyl-1'-azo)-2-hydroxybenzaldehyd oder 5-(4''-Sulfo-4'-phenylazo)phenylazo-2-hydroxybenzaldehyd.

Y bedeutet $C_1$-$C_4$-Alkyl, wie z. B. Methyl, Ethyl, Propyl, n-Butyl oder tert.-Butyl, vorzugsweise jedoch Wasserstoff.

$Ka^{\oplus}$ bedeutet vorzugsweise Lithium, Kalium oder vor allem Natrium. Ausserdem kann $Ka^{\oplus}$ ein Ammoniumkation oder das Ammoniumsalz eines organischen Amins sein.

n, $n_1$, $n_2$ und $n_3$ bedeuten vorzugsweise je O, d. h. die Diazokomponenten A, B, C und D tragen in o-Stellung zur Azogruppe jeweils eine Hydroxygruppe.

Z und Z' bedeuten vorzugsweise je Stickstoff.

p ist vorzugsweise 2, 3 oder 4 und die Sulfogruppen sind bevorzugt in den Resten A, B, C, D, E und F angeordnet.

Bevorzugte erfindungsgemässe Farbstoffe entsprechen der Formel II:

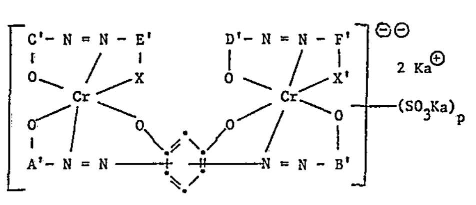

(II)

worin

X und X' unabhängig voneinander Sauerstoff oder eine Gruppe der Formel −NR−, worin R Wasserstoff oder $C_1$-$C_4$-Alkyl darstellt,

A', B', C' und D' unabhängig voneinander je den Rest einer Diazokomponente der Benzol- oder Naphthalinreihe, welcher die Hydroxygruppe in o-Stellung zur Azogruppe trägt,

E' und F' unabhängig voneinander je den Rest einer Kupplungskomponente, welche die Gruppe X bzw. X' in o- bzw. α-Stellung zur Azogruppe trägt.

p eine ganze Zahl von 2 bis 4, und

$Ka^{\oplus}$ ein Kation bedeutet.

Unter diesen sind diejenigen besonders bevorzugt, bei denen A', B', C' und D' unabhängig voneinander je der Rest eines 1-Hydroxy-2-aminobenzols, welcher ggf. durch Halogen, Nitro, Sulfo oder niedrigmolekulares Alkyl oder Alkoxy substituiert ist, oder der Rest eines 1-Amino-2-hydroxy-4-sulfonaphthalins ist, welcher ggf. in 6-Stellung durch Halogen, wie Brom oder insbesondere Chlor, Nitro oder Sulfo substituiert ist und worin E' und F' unabhängig voneinander je ein ggf. durch Amino und/oder Sulfo substituiertes 1- oder 2-Naphthol, 1- oder 2-Naphthylamin, ggf. substituiert durch Sulfo, p-Alkyl($C_1$-$C_6$)-phenol, 1-Phenyl-3-methyl-5-pyrazolon oder Acetessigsäureanilid ist, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

Die erfindungsgemässen Farbstoffe können nach an sich bekannten Methoden dargestellt werden, beispielsweise indem man ein Mol eines Farbstoffes der Formel III:

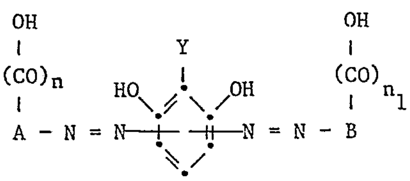

(III)

in den zweifachen 1:1-Chromkomplex umwandelt und diesen dann mit 2 mol eines Farbstoffes der Formel IV:

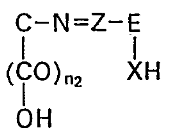

(IV)

und/oder eines Farbstoffes der Formel (V):

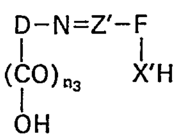

(V)

umsetzt oder vorzugsweise indem man zunächst einen Farbstoff der Formel IV und/oder V zum 1:1-Chromkomplex überführt und 2 mol von diesem dann mit einem Mol des nicht chromierten Farbstoffes der Formel III in den zweifachen 1:2-Chromkomplex umwandelt.

A, B, C, D, E, F, Z, Z', X, X', Y, n, $n_1$, $n_2$ und $n_3$ weisen die unter der Formel I angegebene Bedeutung auf.

Die Chromierung zum 1:1-Chromkomplex sowie dessen Umsetzung mit nicht chromiertem Farbstoff zum 1:2-Chromkomplex werden nach den üblichen Methoden durchgeführt.

Falls bei dem obigen Verfahren die Farbstoffe IV und V verschieden sind, so bilden sich Gemische von 1:2 Metallkomplexen, die neben Komplexen, enthaltend 2 Moleküle Farbstoff der Formel IV bzw. V, auch Komplexe, enthaltend je ein Molekül des Farbstoffes der Formeln IV und V, aufweisen.

Die nach den obigen Verfahren erhältlichen neuen Metallkomplexfarbstoffe werden vorteilhaft in Form ihrer Salze, insbesondere Alkali-, wie Lithium-, Kalium-, vor allem aber Natriumsalz, oder auch Ammoniumsalze isoliert. Sie eignen sich zum Färben der verschiedensten natürlichen oder synthetischen Stickstoff- oder Hydroxygruppen enhaltenden Materialien wie Polyamiden oder Polyurethanen, insbesondere aber zum Färben von Wolle oder vor allem Leder.

Die Metallkomplexfarbstoffe der Formel I, welche nur 1 oder 2 Sulfogruppen besitzen, werden ggf. auch als Aminsalze isoliert. Diese eignen sich z. B. zum Aufsprühen auf Leder sowie zum Färben von organischen Flüssigkeiten, Lacken und Polymeren.

Die neuen Farbstoffe sind farbstark und decken gut. Sie weisen ein gutes Ziehvermögen und eine gute Säure- und Alkalistabilität auf und ergeben Färbungen mit guten Echtheiten, wie Wasch-, Wasser-, Schweiss-, Reib-, Diffusions-, Licht-, Säure- und Alkaliechtheit. Besondere Erwähnung verdient das gute Aufbauvermögen auf diversen Ledersorten, sowohl auf nur mit Chromsalzen gegerbtem Leder wie auch auf mit vegetabilen oder synthetischen Gerbstoffen nachgegerbtem Leder. Man erhält kräftige braune, graue und schwarze Nuancen.

In den nachfolgenden Beispielen bedeuten die Teile, sofern nichts anderes angegeben wird, Gewichtsteile und die Prozente Gewichtsprozente. Die Temperaturen sind in Grad Celsius angegeben.

In den Beispielen sind die Azobindungen zum Resorcin in den Fällen fixiert gezeichnet, wo sich die Verbindungsstelle für das Hauptprodukt nach dem heutigen Stand der Kenntnisse mit einiger Sicherheit angeben lässt. Durch die angegebenen Formeln sollen jedoch auch die entsprechenden Stellungsisomeren, welche in mehr oder weniger grossem Anteil entstehen, mit umfasst sein.

*Beispiel 1:*

11,0 Teile 1,3-Dihydroxybenzol werden in 300 Teilen Eiswasser suspendiert und durch Zugabe von 300 Teilen einer 30%igen Natriumhydroxidlösung vollständig gelöst. Unter Einhalten einer Temperatur von 0-5° werden nach und nach 70 Teile einer Paste von 1-Diazo-2-hydroxy-6-nitro-naphthalin-4-sulfonsäure, entsprechend ca. 0,22 mol, eingetragen. Das tief blauschwarz gefärbte Kupplungsgemisch wird einige Stunden nachgerührt, bis keine überschüssige Diazoverbindung mehr nachgewiesen werden kann. Nach Neutralisieren mit 5-normaler Salzsäure wird der vollständig ausgefallene Disazofarbstoff der Konstitution:

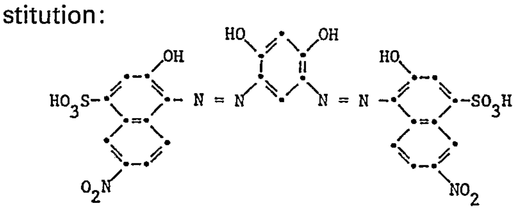

durch Filtration isoliert, mit verdünnter Natriumchloridlösung gewaschen und im Vakuum bei 80° getrocknet. Der Farbstoff ist im Dünnschichtchromatogramm einheitlich und enthält insbesondere keinen entsprechenden Monoazofarbstoff.

Von dem oben erhaltenen Disazofarbstoff wird eine solche Menge, die 35,0 Teilen reinem Farbstoff (= 0,05 mol) entspricht, in 500 Teilen Wasser von 70° angeschlämmt. Nach Zugabe von 48,7 Teilen 1:1-Chromkomplex des Monoazofarbstoffs aus 1-Diazo-2-hydroxy-6-nitronaphthalin-4-sulfonsäure und 2-Hydroxynaphthalin (0,1 mol) wird die Suspension durch Zutropfen von 2-normaler Natriumhydroxidlösung auf bleibend pH 7,0-7,5 gestellt, auf 90-95° erhitzt und bei dieser Temperatur nachgerührt, bis sich beige Ausgangsfarbstoffe vollständig zum doppelten Mischkomplex der Formel:

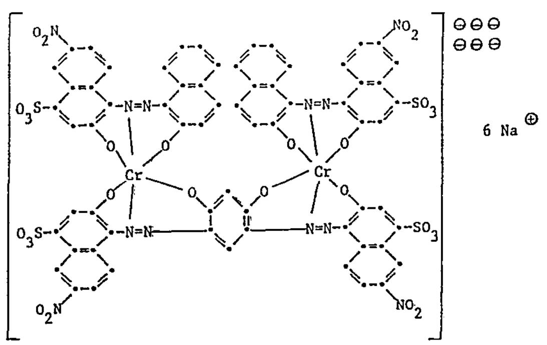

umgesetzt haben.

Der neue Farbstoff wird aus der klaren, tiefschwarzen Reaktionslösung durch Zugabe von Natriumchlorid abgeschieden, durch Filtration isoliert, mit verdünnter Natriumchloridlösung gewaschen, im Vakuum bei 80° getrocknet und schliesslich gemahlen. Er liegt als leicht wasserlösliches, schwarzes Pulver vor und färbt Chromleder und nachgegerbtes Leder nach dem im Färbebeispiel angegebenen Verfahren in gut deckenden, echten, leicht blaustichigen Schwarznuancen.

*Beispiel 2:*

Arbeitet man wie im Beispiel 1 beschrieben, verwendet jedoch anstelle von 70 Teilen 1-Diazo-2-hydroxy-6-nitronaphthalin-4-sulfonsäure 55 Teile 1-Diazo-2-hydroxynaphthalin-4-sulfonsäure, so erhält man einen Farbstoff, welcher Leder blaustichig schwarz färbt.

*Beispiel 3:*

11,0 Teile 1,3-Dihydroxybenzol werden in 100 Teilen Eiswasser suspendiert und durch Zugabe von 12 Teilen Natriumhydroxid gelöst. Nach Zugabe einer aus 28,7 Teilen 4-Chlor-2-amino-1-hydroxybenzol in üblicher Weise erhaltenen Suspension der Diazoverbindung wird das Reaktionsgemisch zunächst einige Stunden bei 3-8°, dann bei bis auf 20° steigender Temperatur nachgerührt, bis keine überschüssige Diazoverbindung mehr nachweisbar ist. Unter Farbumschlag von orangerot nach braunviolett entsteht der Disazofarbstoff von folgender Konstitution:

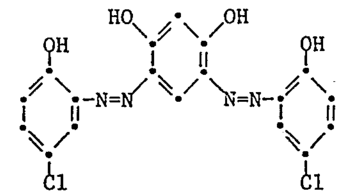

Nach Neutralisieren des Kupplungsgemisches mit Salzsäure wird der als brauner Niederschlag vollständig ausgefallene Farbstoff durch Filtrieren isoliert, mit verdünnter Natriumchloridlösung gewaschen und im Vakuum bei 80° getrocknet.

20,8 Teile des reinen Disazofarbstoffs, entsprechend 0,05 mol, werden mit 400 Teilen Wasser bei 70-75° angeschlämmt. Nach Eintragen von 43,8 Teilen 1:1-Chromkomplex des Monoazofarbstoffs aus diazotierter 1-Hydroxy-2-amino-4-nitrobenzol-6-sulfonsäure und 2-Hydroxynaphthalin wird die Suspension durch Zutropfen von 2-normaler Natriumhydroxydlösung auf pH 7-8 gestellt und anschliessend so lange bei diesem pH und bei 90-95° gerührt, bis keiner der beiden Ausgangsfarbstoffe mehr nachgewiesen werden kann. Es entsteht eine klare, tiefbraune Lösung des doppelten, einheitlich-asymmetrischen Chromkomplexes der Konstitution:

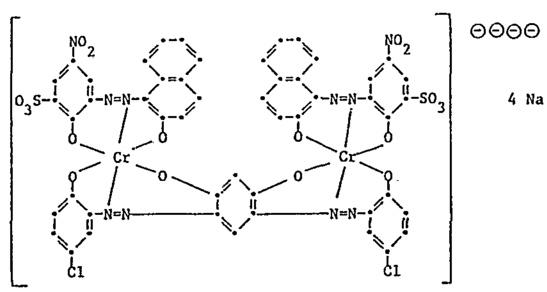

Der durch Zugabe von Natriumchlorid abgeschiedene, durch Filtration isolierte, getrocknete und gemahlene Farbstoff liegt als dunkelbraunes, wasserlösliches Pulver vor, mit welchem Chromleder in echten, violettstichigen Dunkelbrauntönen gefärbt werden kann.

In der nachfolgenden Tabelle sind weitere Farbstoffe dieses Bauprinzips angeführt, welche gemäss der vorstehenden Arbeitsweise erhalten werden. Kolonne I gibt dabei die zur Herstellung des metallfreien Disazofarbstoffs verwendete Diazokomponente, welche mit Resorcin umgesetzt wird, Kolonne II den zur doppelten Umsetzung zum Mischkomplex dienenden 1:1-Chromkomplex an. In Kolonne III ist die auf Leder erzielbare Nuance angegeben.

| | I | II | III |
|---|---|---|---|
| Nr. | Diazokomponente | Als 1:1-Chromkomplex eingesetzter Monoazofarbstoff | Nuance |
| 1 | 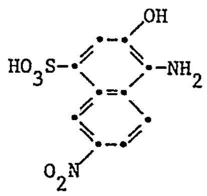 | 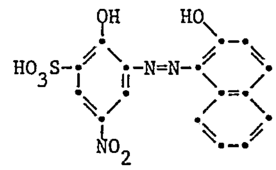 | braunschwarz |
| 2 | 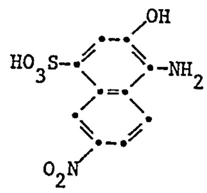 | 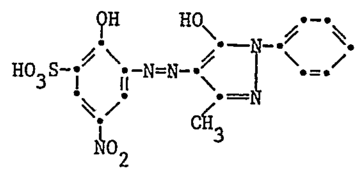 | dunkelbraun |
| 3 | 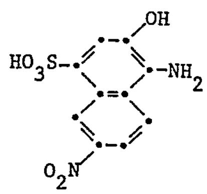 | 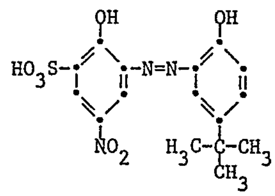 | dunkelbraun |
| 4 | 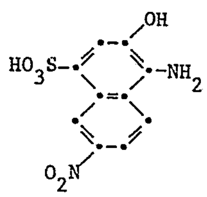 | 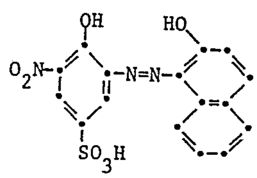 | schwarz |
| 5 | 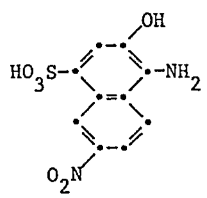 | 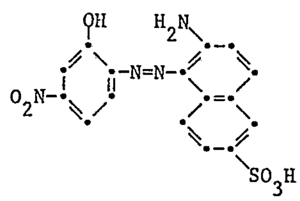 | olivegrau |
| 6 | 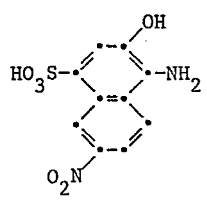 | 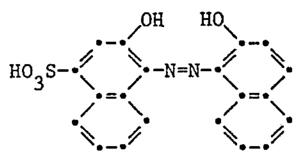 | blauschwarz |
| 7 | 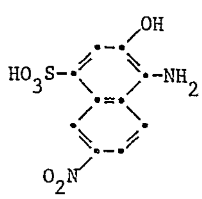 | 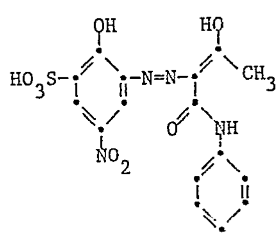 | olivebraun |

| | I | II | III |
|---|---|---|---|
| Nr. | Diazokomponente | Als 1:1-Chromkomplex eingesetzter Monoazofarbstoff | Nuance |
| 8 | 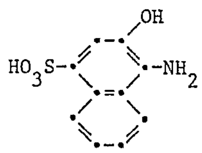 | 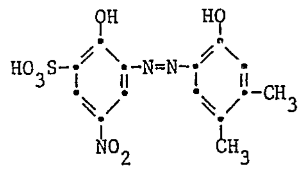 | braun |
| 9 | 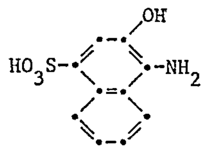 | 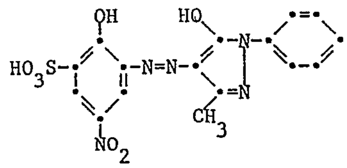 | braun |
| 10 | 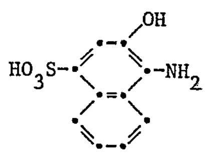 | 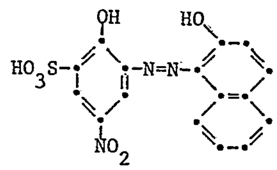 | violettschwarz |
| 11 | 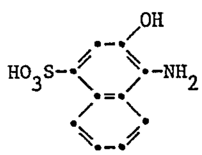 | 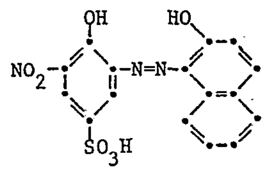 | rotstichig schwarz |
| 12 | 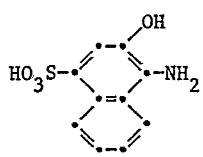 | 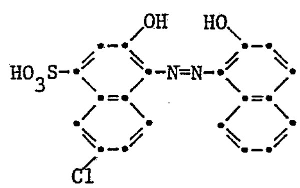 | blauschwarz |
| 13 | 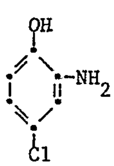 | 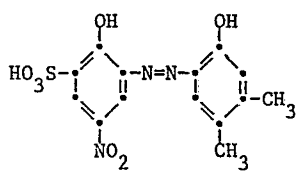 | violettbraun |
| 14 | 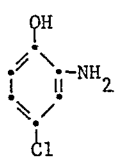 | 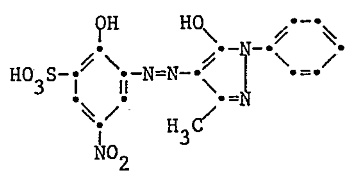 | violettbraun |
| 15 | 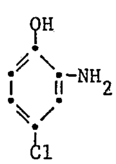 | 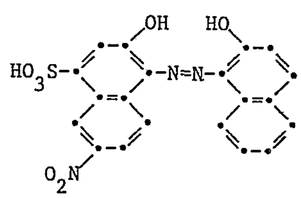 | violettschwarz |

| | I | II | III |
|---|---|---|---|
| Nr. | Diazokomponente | Als 1:1-Chromkomplex eingesetzter Monoazofarbstoff | Nuance |
| 16 | 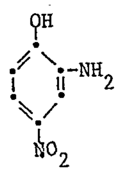 | 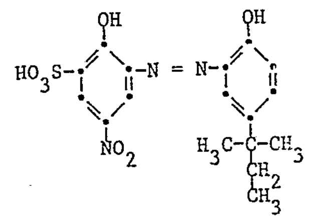 | braun |
| 17 | 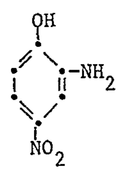 | 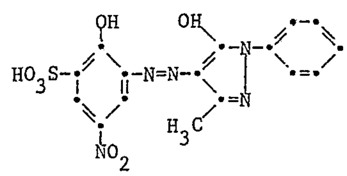 | rotbraun |
| 18 | 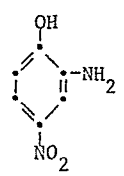 | 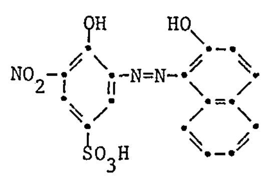 | dunkelbraun |
| 19 | 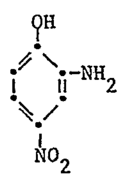 | 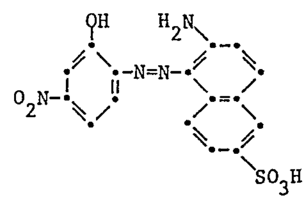 | olivebraun |
| 20 | 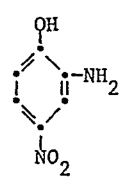 | 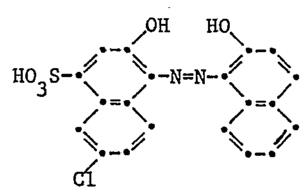 | braunviolett |
| 21 | 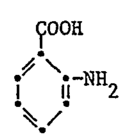 | 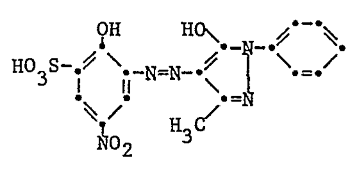 | rotbraun |
| 22 | 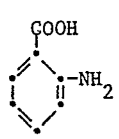 | 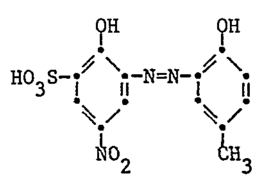 | braun |

*Beispiel 4:*

40,5 Teile des in bekannter Weise zugänglichen Monoazofarbstoffs aus 1-Diazo-2-hydroxy-6-nitronaphthalin-4-sulfonsäure und 1,3-Dihydroxybenzol werden in 400 Teilen Eiswasser angeschlämmt und nach Zugabe von 100 Teilen einer

10-normalen Natriumhydroxidlösung anteilweise mit der aus 23,4 Teilen 4-Nitro-2-aminophenol-6-sulfonsäure nach üblichem Verfahren erhaltenen Diazoverbindung versetzt. Unter Farbumschlag von weinrot nach dunkelgrün entsteht im Laufe einiger Stunden der einheitliche, asymmetrische Disazofarbstoff der Konstitution:

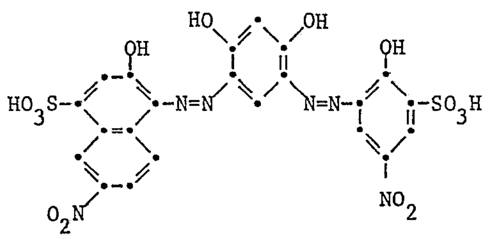

Der vollständig gelöste Disazofarbstoff wird durch Zugabe von Natrium chlorid und Neutralisieren der Kupplungslösung mit 5-normaler Salzsäure abgeschieden, durch Filtration isoliert und mit 15%iger Natriumchloridlösung gewaschen. Von dem Filterrückstand wird eine solche Menge, die 32,5 Teilen reinem Disazofarbstoff entspricht (= 0,05 mol), gemäss Beispiel 1 zu einem doppelten Mischkomplex folgender Konstitution umgesetzt:

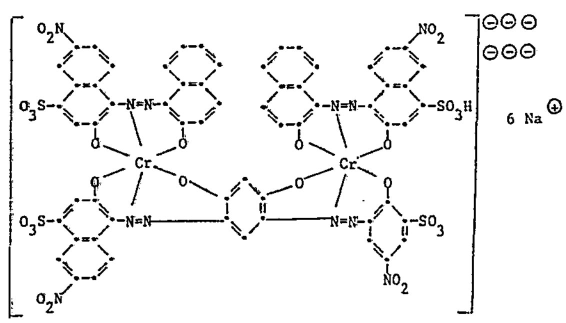

Mit diesem Farbstoff werden auf Leder neutrale Schwarznuancen von guten Echtheiten erzielt.

*Beispiel 5:*

Arbeitet man wie im Beispiel 4 beschrieben, verwendet jedoch anstelle des Monoazofarbstoffes aus 1-Diazo-2-hydroxy-6-nitronaphthalin-4-sulfonsäure und 1,3-Dihydroxybenzol äquivalente Mengen des Monoazofarbstoffes aus 1-Diazo-2-hydroxynaphthalin-4-sulfonsäure und 1,3-Dihydroxybenzol, so erhält man bei im übrigen gleicher Arbeitsweise einen analogen Farbstoff, welcher Leder in etwas blaustichigerem Schwarz färbt als der Farbstoff gemäss Beispiel 4.

*Beispiel 6:*

40,5 Teile des in bekannter Weise hergestellten Monoazofarbstoffs aus 1-Diazo-2-hydroxy-6-nitronaphthalin-4-sulfonsäure und 1,3-Dihydroxybenzol werden mit 400 Teilen Eiswasser angeschlämmt und nach Zugabe von 100 Teilen 10-normaler Natriumhydroxidlösung nach und nach mit der nach üblichem Verfahren erhaltenen Diazoverbindung aus 15,4 Teilen 4-Nitro-2-aminophenol versetzt. Das Kupplungsgemisch wird einige Stunden nachgerührt, bis keine überschüssige Diazoverbindung mehr nachgewiesen werden kann. Der erhaltene Disazofarbstoff der Konstitution:

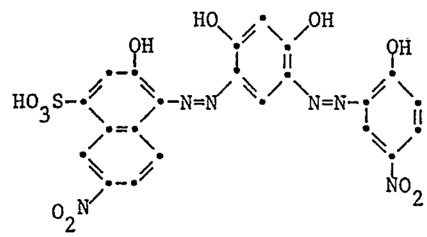

wird durch Neutralisation der Kupplungslösung mit 5-normaler Salzsäure und Zugabe von Natriumchlorid vollständig abgeschieden, durch Filtration isoliert und mit verdünnter Natriumchloridlösung gewaschen.

Von dem Filterrückstand wird eine solche Menge, die 27,6 (0,05 mol) Teilen reinem Disazofarbstoff entspricht, nach den Angaben des Beispiels 1 mit 43,8 Teilen des in üblicher Weise erhaltenen, als 1:1-Chromkomplex vorliegenden Monoazofarbstoffs aus diazotierter 1-Hydroxy-2-amino-4-nitrobenzol-6-sulfonsäure und 2-Hydroxynaphthalin zum Chromkomplex folgender Konstitution umgesetzt:

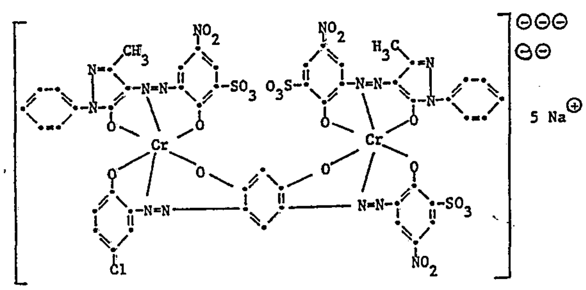

Mit diesem Farbstoff lässt sich Chromleder in gut deckenden, echten Schwarznuancen färben.

*Beispiel 7:*

14,35 Teile 4-Chlor-2-aminophenol werden in üblicher Weise diazotiert und in Gegenwart überschüssigen Natriumcarbonats mit 11,1 Teilen 1,3-Dihydroxybenzol zum Monoazofarbstoff der Konstitution:

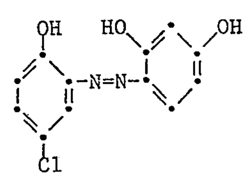

gekuppelt. Die erhaltene Suspension wird nach und nach mit der aus 23,4 Teilen 4-Nitro-2-aminophenol-6-sulfonsäure nach bekanntem Verfahren erhaltenen Diazoverbindung versetzt, wobei durch gleichzeitiges Zutropfen von 5-normaler Natriumhydroxidlösung ein pH-Bereich von 9,5 bis 10,5 eingehalten und die Temperatur durch Kühlen in Eiswasser bei 10-12° gehalten wird. Nach einigen Stunden Rühren ist die Kupplung zum braunvioletten Disazofarbstoff der Konstitution:

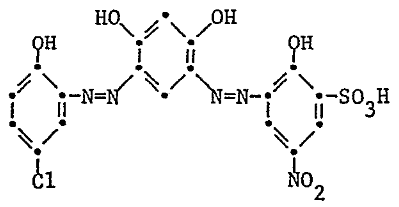

beendet. Der Farbstoff wird durch Neutralisieren mit 2-normaler Salzsäure und Zugabe von wenig Natriumchlorid abgeschieden, durch Filtration abgetrennt und mit verdünnter Natriumchloridlösung gewaschen.

Von dem Filterrückstand wird eine solche Menge, die 25 Teilen (0,05 mol) reinem Disazofarbstoff entspricht, unter den im Beispiel 1 beschriebenen Bedingungen mit 46,8 Teilen 1:1-Chromkomplex des bekannten Monoazofarbstoffs aus diazotierter 4-Nitro-2-aminophenol-6-sulfonsäure und 1-Phenyl-3-methyl-pyrazol-5-on zum Komplex der folgenden Konstitution umgesetzt:

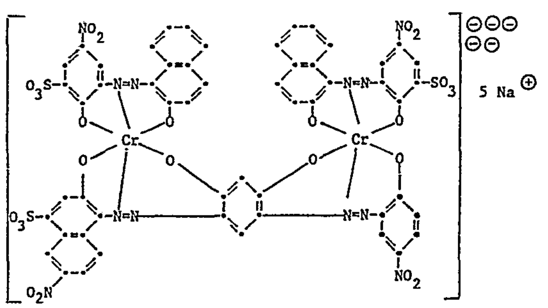

Der Farbstoff ergibt auf Leder volle, gut nass- und lichtechte Rotbrauntöne.

*Beispiel 8:*

13,7 Teile 1-Aminobenzol-2-carbonsäure werden in üblicher Weise diazotiert und in Gegenwart überschüssigen Natriumcarbonats mit 11,1 Teilen 1,3-Dihydroxybenzol gekuppelt. Die erhaltene Suspension des orangegelben Monoazofarbstoffs wird bei 10-12° anteilweise mit der aus 15,4 Teilen 4-Nitro-2-amino-1-hydroxybenzol erhaltenen Diazoverbindung versetzt, wobei durch gleichzeitiges Zutropfen von 5-normaler Natriumhydroxidlösung ein pH-Bereich von 9-10 eingehalten wird. Nach einigen Stunden ist die Kupplung zum Disazofarbstoff der Konstitution:

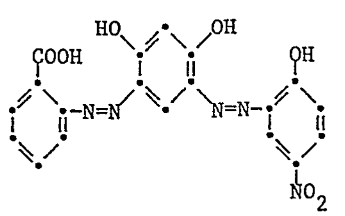

beendet. Nach Neutralisieren mit 2-normaler Salzsäure wird der vollständig ausgefallene braune Farbstoff durch Filtration isoliert und mit verdünnter Natriumchloridlösung gewaschen.

Von dem Filterrückstand wird eine solche Menge, die 21,15 Teilen (= 0,05 mol) reinem Disazofarbstoff entspricht, unter den im Beispiel 1 angewendeten Reaktionsbedingungen mit 41,6 Teilen 1:1-Chromkomplex des nach bekanntem Verfahren hergestellten Monoazofarbstoffs aus diazotierter 4-Nitro-2-amino-1-hydroxybenzol-6-sulfonsäure und 3,4-Dimethyl-1-hydroxybenzol zum Komplex der folgenden Konstitution umgesetzt:

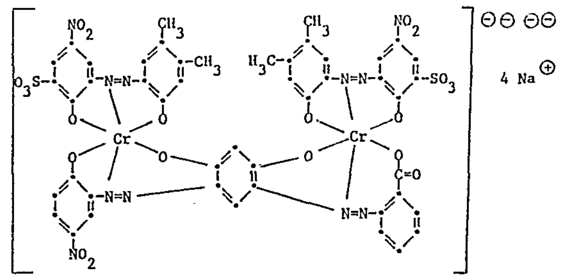

Mit diesem Farbstoff lassen sich auf Chromleder und nachgegerbtem Leder gut deckende, lichtechte Brauntöne erzielen.

*Beispiel 9:*

31,5 Teile des aus diazotiertem 4-Nitro-2-amino-1-hydroxybenzol und 4-t-Amylphenol durch alkalische Kupplung erhaltenen Monoazofarbstoffs werden in 300 Teilen Ethylenglykolmonomethylether suspendiert. Nach Zugabe von 26,6 Teilen Chrom-III-chloridhexahydrat wird das Reaktionsgemisch unter Rühren auf 105° erhitzt und bei dieser Temperatur gehalten, bis aller Monoazofarbstoff in den entsprechenden 1:1-Chromkomplex übergeführt ist.

Die erhaltene klare, braunrote Lösung wird auf 90-95° abgekühlt und mit der Suspension von 25 Teilen des im Beispiel 7 beschriebenen, metallfreien Disazofarbstoffs in 300 Teilen Wasser von 70° sowie soviel 1-normaler Natriumhydroxidlösung versetzt, dass das resultierende Reaktionsgemisch einen pH-Wert von 7,5-8,0 aufweist. Nach zweistündigem Rühren bei 90-95° ist die Umsetzung zum doppelten, einheitlich-asymmetrischen Komplex der Konstitution:

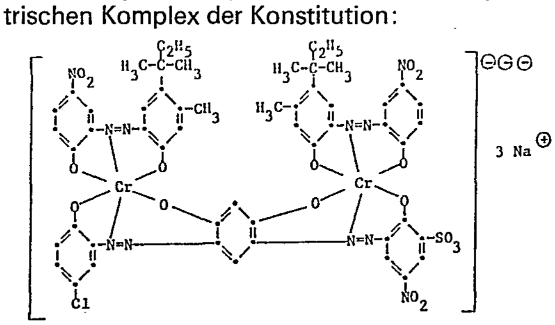

beendet. Der nach Eindampfen der Reaktionslösung erhaltene Farbstoff ergibt auf Wolle, Polyamidfasern und Leder lichtechte, rotstichige Brauntöne.

In der nachfolgenden Tabelle sind weitere Farbstoffe angeführt, welche gemäss der vorstehenden Arbeitsweise erhalten werden. Dabei sind in Kolonnen I und II die zur Herstellung des zweifach metallisierbaren Disazofarbstoffs verwendeten Diazokomponenten, in Kolonne III die zur Umsetzung zum doppelten einheitlich-asymmetrischen Komplex dienenden 1:1-Chromkomplexe und in Kolonne IV die auf Wolle, Polyamid und Leder erzielbaren Farbtöne angegeben.

| | I | II | III | IV |
|---|---|---|---|---|
| Nr. | 1. Diazokomponente | 2. Diazokomponente | Als 1:1-Chromkomplex verwendeter Monoazofarbstoff | Nuance auf Leder |
| 1 | 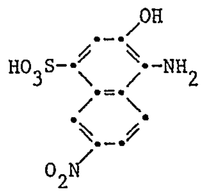 | 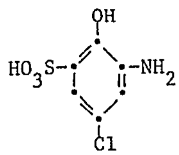 | 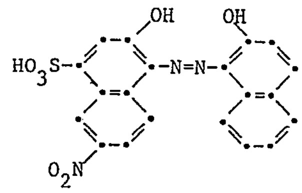 | blaustichig schwarz |
| 2 | 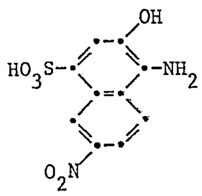 | 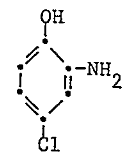 | 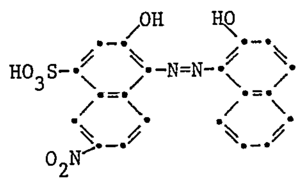 | schwarz |
| 3 | 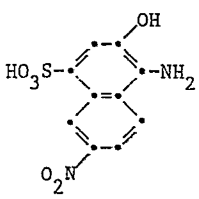 | 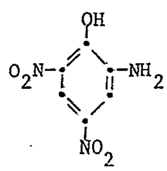 | 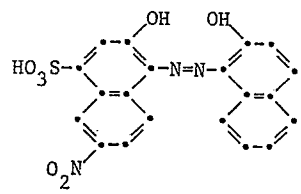 | schwarz |
| 4 | 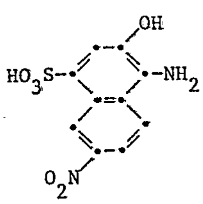 | 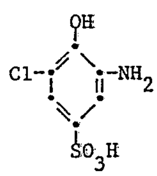 | 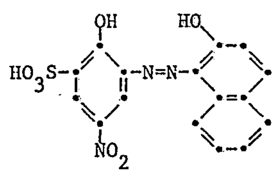 | blaustichig schwarz |
| 5 | 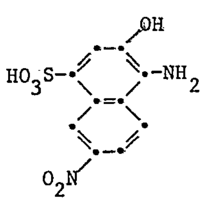 | 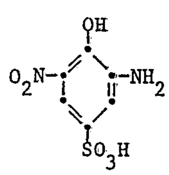 | 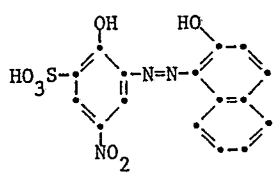 | schwarz |
| 6 | 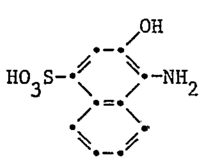 | 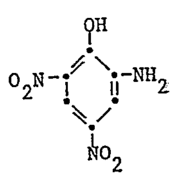 | 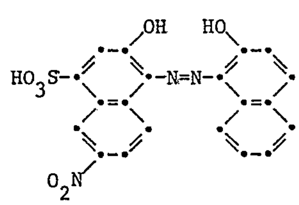 | rotstichig schwarz |
| 7 | 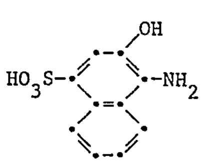 | 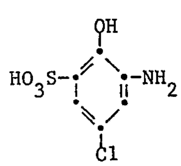 | 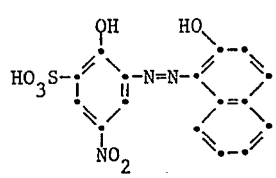 | schwarz |

| | I | II | III | IV |
|---|---|---|---|---|
| Nr. | 1. Diazokomponente | 2. Diazokomponente | Als 1:1-Chromkomplex verwendeter Monoazofarbstoff | Nuance auf Leder |
| 8 | 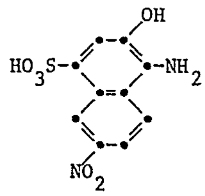 | 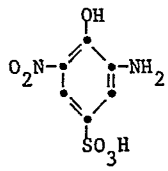 | 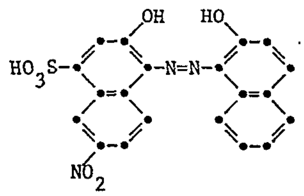 | schwarz |
| 9 | 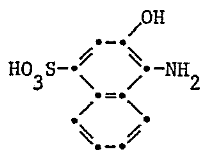 | 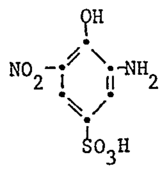 | 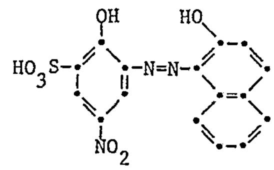 | schwarz |
| 10 | 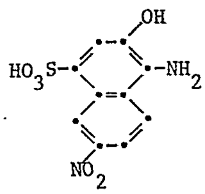 | 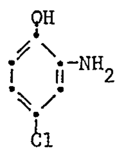 | 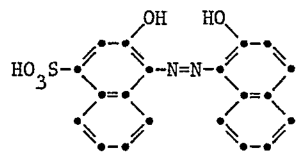 | violett |
| 11 | 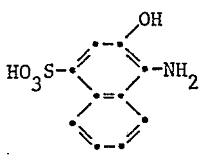 | 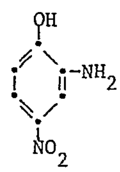 | 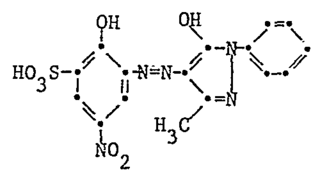 | dunkelbraun |
| 12 | 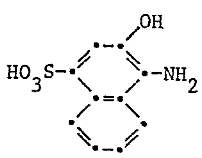 | 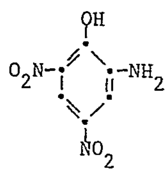 | 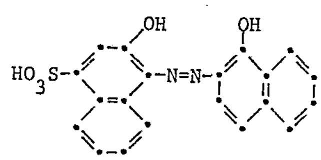 | grünstichig schwarz |
| 13 | 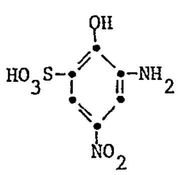 | 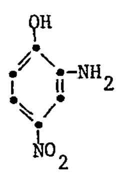 | 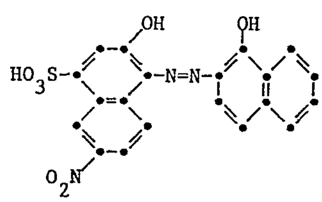 | rotstichig schwarz |
| 14 | 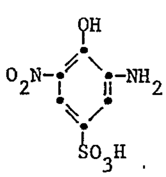 | 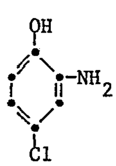 | 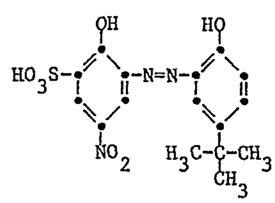 | braun |

| | I | II | III | IV |
|---|---|---|---|---|
| Nr. | 1. Diazokomponente | 2. Diazokomponente | Als 1:1-Chromkomplex verwendeter Monoazofarbstoff | Nuance auf Leder |
| 15 | 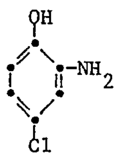 | 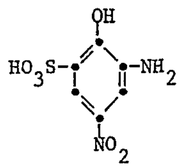 | 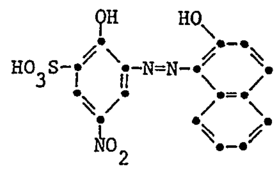 | violettbraun |
| 16 | 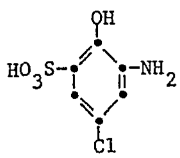 | 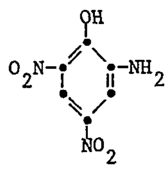 | 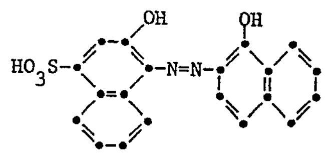 | schwarz |
| 17 | 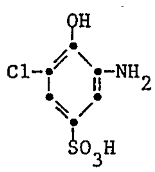 | 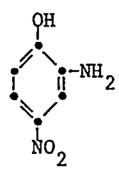 | 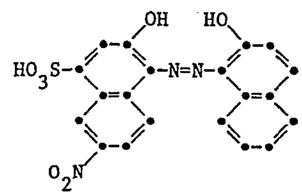 | schwarz |
| 18 | 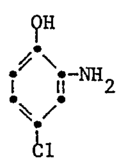 | 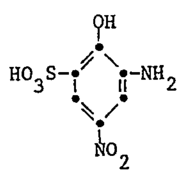 | 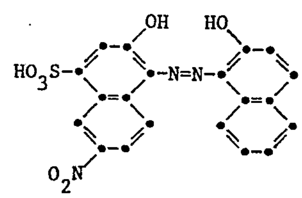 | violettschwarz |
| 19 | 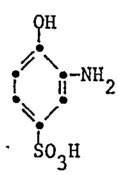 | 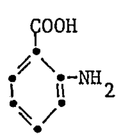 | 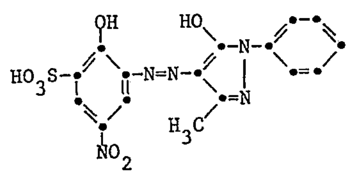 | gelbbraun |
| 20 | 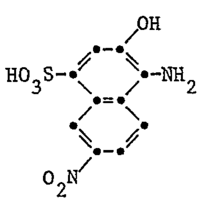 | 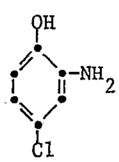 | 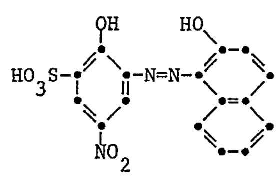 | schwarz |
| 21 | 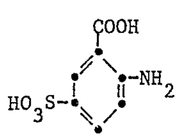 | 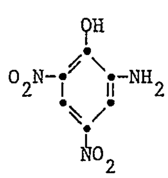 | 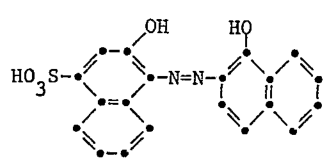 | grünstichig schwarz |

| | I | II | III | IV |
|---|---|---|---|---|
| Nr. | 1. Diazokomponente | 2. Diazokomponente | Als 1:1-Chromkomplex verwendeter Monoazofarbstoff | Nuance auf Leder |
| 22 | 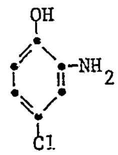 | 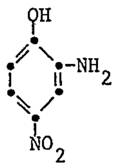 | 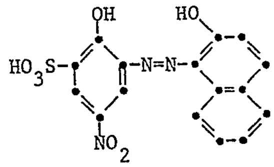 | violett |
| 23 | 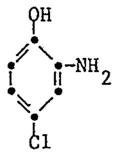 | 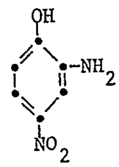 | 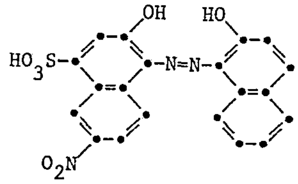 | dunkelviolett |
| 24 | 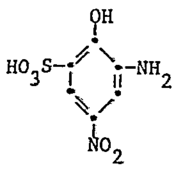 | 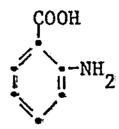 | 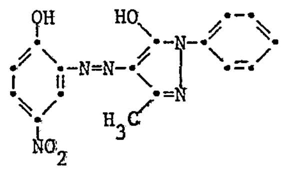 | orangebraun |
| 25 | 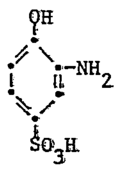 | 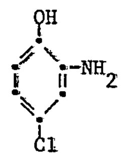 | 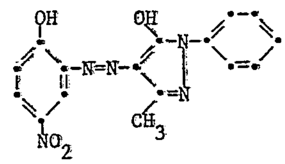 | rotstichig braun |
| 26 | 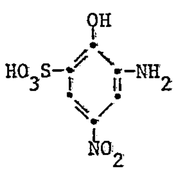 | 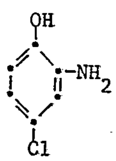 | 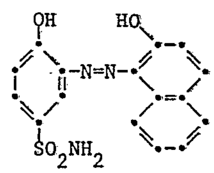 | violettbraun |
| 27 | 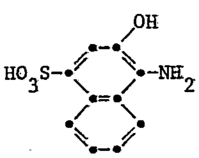 | 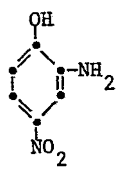 | 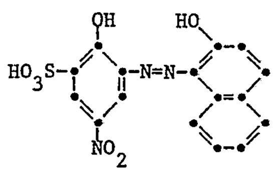 | schwarz |
| 28 | 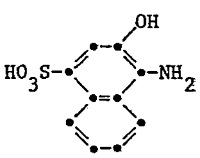 | 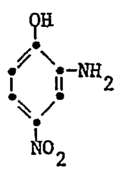 | 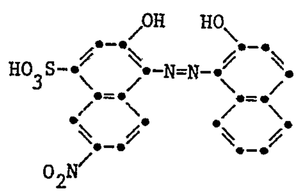 | blaustichig schwarz |
| 29 | 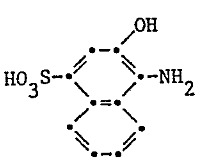 | 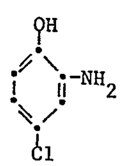 | 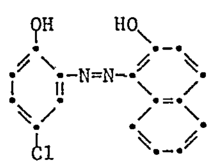 | violett |

| | I | II | III | IV |
|---|---|---|---|---|
| Nr. | 1. Diazokomponente | 2. Diazokomponente | Als 1:1-Chromkomplex verwendeter Monoazofarbstoff | Nuance auf Leder |
| 30 | 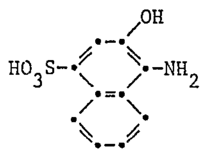 | 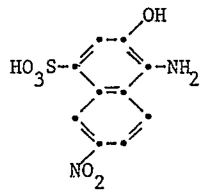 | 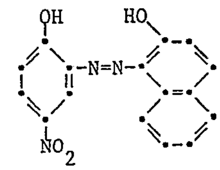 | braunschwarz |
| 31 | 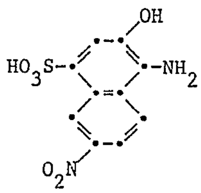 | 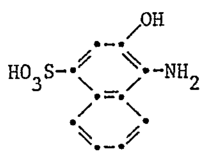 | 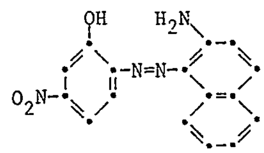 | grünstichig schwarz |
| 32 | 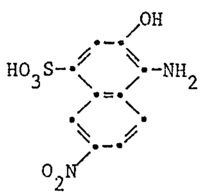 | 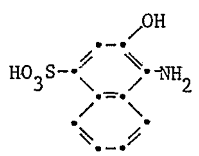 | 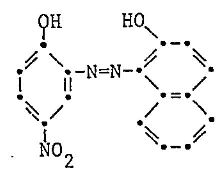 | braunschwarz |
| 33 | 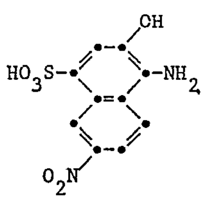 | 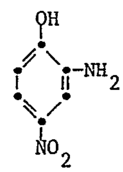 | 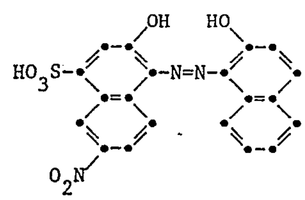 | schwarz |
| 34 | 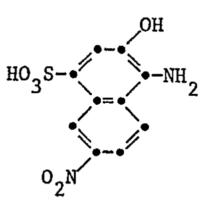 | 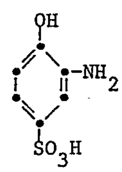 | 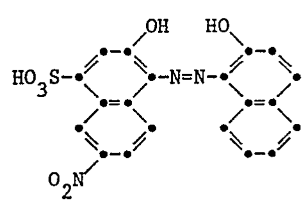 | blaustichig schwarz |

*Beispiel 10:*

27,6 Teile des im Beispiel 6 beschriebenen, metallfreien Disazofarbstoffs werden in 400 Teilen Wasser von 70° unter Rühren verteilt. Nach Eintragen von 21,9 Teilen des nach bekanntem Verfahren hergestellten, als 1:1-Chromkomplex vorliegenden Monoazofarbstoffs aus diazotierter 1-Hydroxy-2-amino-4-nitrobenzol-6-sulfonsäure und 2-Hydroxynaphthalin sowie 23,4 Teilen des in üblicher Weise erhaltenen, als 1:1-Chromkomplex vorliegenden Monoazofarbstoffs aus diazotierter 1-Hydroxy-2-amino-6-nitrobenzol-4-sulfonsäure und 1-Phenyl-3-methylpyrazol-5-on wird das Reaktionsgemisch auf 90-95° erwärmt und bei gleichzeitigem Einhalten eines pH-Bereichs von 7,0-7,5 mittels verdünnter Natriumhydroxidlösung so lange unter Rückflusskühlung gerührt, bis die Ausgangsprodukte nicht mehr nachweisbar sind. Die erhaltene, tiefbraune Reaktionslösung enthält ein Gemisch aus 3 Metallkomplexfarbstoffen der folgenden Konstitutionen:

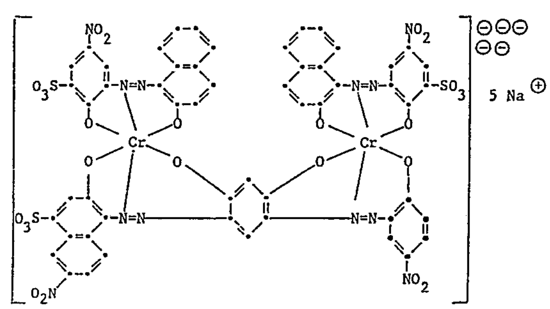

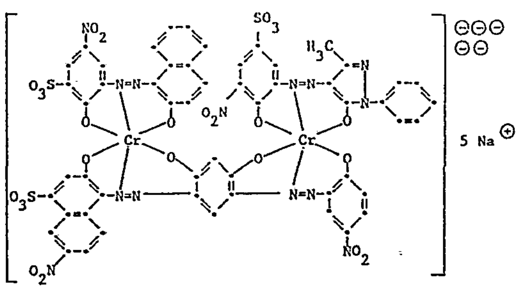

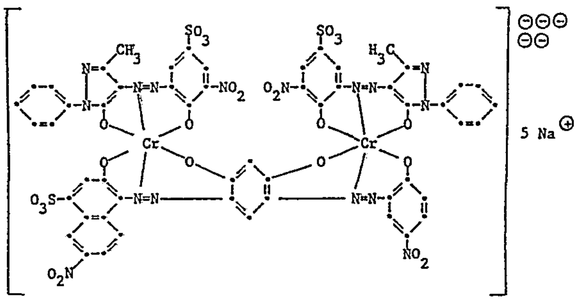

Der aus der filtrierten Reaktionslösung durch Eindampfen zur Trockne isolierte, neue Farbstoff ergibt auf Chromleder und nachgegerbtem Leder volle, lichtechte, dunkle Brauntöne.

Wird anstelle des oben verwendeten Disazofarbstoffs der im Beispiel 1 beschriebene, metallfreie Disazofarbstoff in gleicher Weise mit den beiden erwähnten 1:1-Chromkomplexen umgesetzt, so resultiert ein Farbstoff, der Leder in vollen, licht- und nassechten bräunlichen Schwarznuancen färbt.

*Beispiel 11:*

25 Teile des gemäss Beispiel 7 erhaltenen metallfreien Disazofarbstoffs werden unter Rühren in 300 Teilen Wasser bei 70° suspendiert. Nach Zugabe von 35,8 Teilen 1:1-Chromkomplex des vorbekannten Azomethinfarbstoffs aus 1-Hydroxy-2-amino-4-nitrobenzol-6-sulfosäure und 2-Hydroxybenzaldehyd wird das Reaktionsgemisch durch Zutropfen einer verdünnten Natriumhydroxidlösung auf pH 7,0-7,5 gestellt, anschliessend auf 90-95° C erhitzt und so lange unter Rückflusskühlung gerührt, bis die Ausgangsprodukte nicht mehr nachgewiesen werden können. Es entsteht eine klare, rotbraune Lösung des Komplexfarbstoffs von folgender Konstitution:

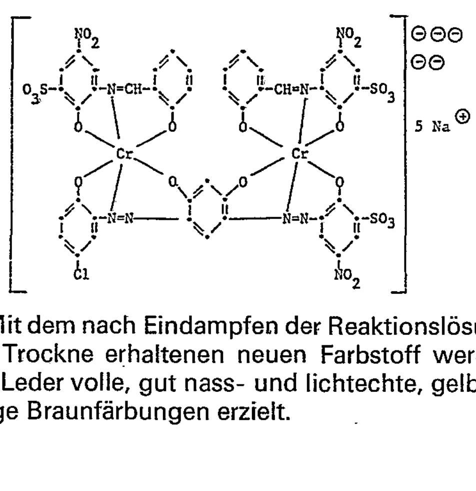

Mit dem nach Eindampfen der Reaktionslösung zur Trockne erhaltenen neuen Farbstoff werden auf Leder volle, gut nass- und lichtechte, gelbstichige Braunfärbungen erzielt.

Wird der oben genannte, metallfreie Disazofarbstoff unter den gleichen Bedingungen mit 17,9 Teilen 1:1-Chromkomplex des erwähnten Azomethinfarbstoffs sowie 21,9 Teilen 1:1-Chromkomplex des Monoazofarbstoffs aus diazotierter 1-Hydroxy-2-amino-4-nitrobenzol-6-sulfosäure und 2-Hydroxynaphthalin gemeinsam umgesetzt, so entsteht ein drei Komponenten enthaltendes Gemisch asymmetrischer Chromkomplexe.

Der durch Eindampfen isolierte, leicht wasserlöslicher Farbstoff ergibt auf Chromleder und auf nachgegerbtem Leder gut deckende, echte Brauntöne.

*Beispiel 12:*

In 200 Teilen Ethylenglykol werden 32,5 Teile des im Beispiel 4 genannten, metallfreien Disazofarbstoffs suspendiert. Nach Zugabe von 27 Teilen Chrom-III-chloridhexahydrat wird das Reaktionsgemisch auf ca. 130-135° erhitzt und bei dieser Temperatur gerührt, bis der Ausgangsfarbstoff nicht mehr nachgewiesen werden kann. Unter Farbumschlag von rotbraun nach graublau entsteht ein zweifacher 1:1-Chromkomplex folgender Konstitution:

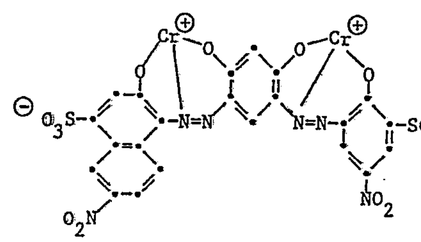

Das auf 60° abgekühlte Metallisierungsgemisch wird unter Rühren mit 800 Teilen eine 20%igen Natriumchloridlösung verdünnt, wobei der Chromkomplexfarbstoff ausfällt; er wird durch Filtration isoliert und mit verdünnter Natriumchloridlösung gewaschen.

Von dem Filterrückstand wird eine solche Menge, die 37,4 Teilen reinem zweifachen 1:1-Komplex entspricht, unter Rühren in 400 Teilen Wasser von 70° suspendiert. Nach Eintragen von 34,3 Teilen des Monoazofarbstoffs aus diazotiertem 1-Hydroxy-2-aminobenzol-4-sulfonsäureamid und 2-Hydroxynaphthalin wird das Reaktionsgemisch unter Rühren auf 90-95° erwärmt und gleichzeitig durch Zutropfen von 2-normaler Natriumhydroxidlösung ein pH-Bereich von 7,5-8,5 eingehalten. Es entsteht eine tiefviolette Lösung des Chromkomplexes von folgender Konstitution:

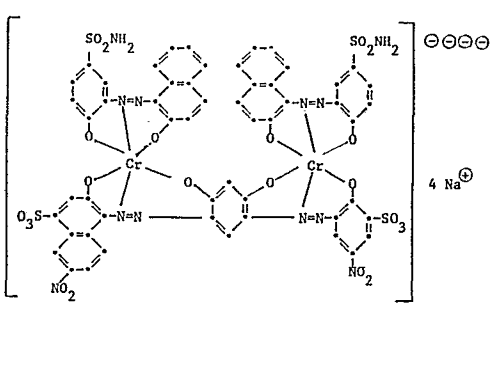

Der neue Farbstoff wird aus der Reaktionslösung durch Zugabe von Natriumchlorid gefällt, durch Filtration isoliert und nach Waschen mit Natriumchloridlösung getrocknet. Er ist gut wasserlöslich und färbt Wolle, Polyamidfasern und vor allem Leder in vollen violettstichigen Schwarztönen.

Wird zur Umsetzung mit dem obigen, zweifachen 1:1-Chromkomplex anstelle des genannten Monoazofarbstoffs eine Mischung aus 15,45 Teilen des Monoazofarbstoffs aus diazotiertem 4-Nitro-2-amino-phenol und 2-Hydroxynaphthalin sowie 21,95 Teilen des Monoazofarbstoffs aus 1-Diazo-2-hydroxy-6-nitronaphthalin-4-sulfonsäure und 1-Hydroxynaphthalin verwendet, so wird ein aus drei verschiedenen Komplexen bestehender Komplexfarbstoff erhalten, mit welchem auf Leder gut deckende, grünstichige Schwarznuancen erzielt werden.

*Beispiel 13:*

27,6 Teile des im Beispiel 6 beschriebenen, metallfreien Disazofarbstoffs werden nach den Angaben des Beispiels 12 in den entsprechenden zweifachen 1:1-Chromkomplex übergeführt. 32,7 Teile des reinen Chromkomplexes werden in 400 Teilen Wasser von 70° mit 15,4 Teilen 4-Nitro-2-aminophenol und 30,5 Teilen des Monoazofarbstoffs aus diazotierter 1-Aminobenzol-4-sulfosäure und 2-Hydroxybenzaldehyd gemeinsam suspendiert. Das Reaktionsgemisch wird unter Rühren auf 90-95° erwärmt und gleichzeitig durch Zutropfen von 2-normaler Natriumhydroxidlösung ein pH-Bereich von 7,0-7,5 eingehalten. Es entsteht eine klare, olivgrüne Lösung des folgenden Chromkomplexes:

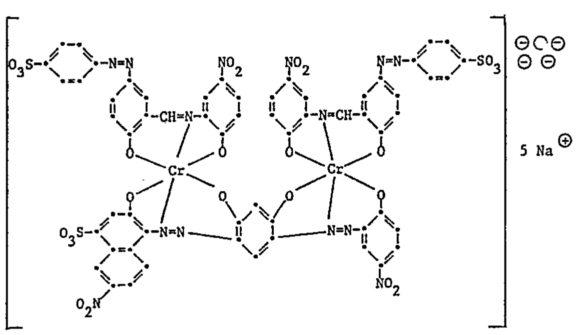

Der durch Eindampfen der Reaktionslösung zur Trockne erhaltenen, leicht wasserlösliche Farbstoff ergibt auf Leder volle, gut licht- und nassechte Olivgrünfärbungen.

*Beispiel 14:*

Aus 35 Teilen das im Beispiel 1 beschriebenen, metallfreien Disazofarbstoffs wird durch metallisieren mit Chrom-III-chloridhexahydrat in Ethylenglykol nach den Angaben des Beispiels 12 der entsprechende, zweifache 1:1-Chromkomplex hergestellt.

40,2 Teile der reinen Chromverbindung werden gemäss Beispiel 12 bzw. 13 mit der Mischung aus 20,95 Teilen des Monoazofarbstoffs aus diazotierter 1-Hydroxy-2-amino-6-nitrobenzol-4-sulfonsäure und 1-Phenyl-3-methyl-pyrazol-5-on und 16,9 Teilen des Azomethinfarbstoffs aus 1-Hydroxy-2-amino-4-nitrobenzol-6-sulfonsäure und 2-Hydroxy-benzaldehyd umgesetzt. Die tiefbraune Reaktionslösung besteht aus einem Gemisch dreier Komponenten, d. h. zwei doppelten einheitlich-asymmetrischen Komplexen mit jeweils dem gleichen Monoazo-, bzw. Azomethinfarbstoff, und einem Mischkomplex, in welchem sowohl der Monoazo- als auch der Azomethinfarbstoff an den zweifachen 1:1-Chromkomplex angelagert sind.

Mit dem nach Eindampfen der Reaktionslösung zur Trockne erhaltenen, neuen Farbstoff werden auf verschiedenen Ledersorten gut deckende, nass- und lichtechte Brauntöne erhalten.

*Beispiel 15:*

Aus 35 Teilen des gemäss Beispiel 1 erhaltenen, metallfreien Disazofarbstoffs wird durch Metallisieren mit Chrom-III-chlorid-hexahydrat in Ethylenglykol nach den Angaben des Beispiel 12 der entsprechende, zweifache 1:1-Chromkomplex hergestellt.

40,2 Teile der reinen Chromverbindung werden in 400 Teilen Wasser von 75° angeschlämmt. Nach Zugabe vom 12,2 Teilen Salicylaldehyd und 7,5 Teilen Aminoessigsäure wird das Reaktionsgemisch unter Rühren auf 90 bis 95° erwärmt und gleichzeitig durch Zutropfen von 2-normaler Natriumhydroxidlösung auf pH 7 bis 7,5 gehalten. Es entsteht eine klare, dunkelgrüne Lösung des Komplexfarbstoffs folgender Konstitution:

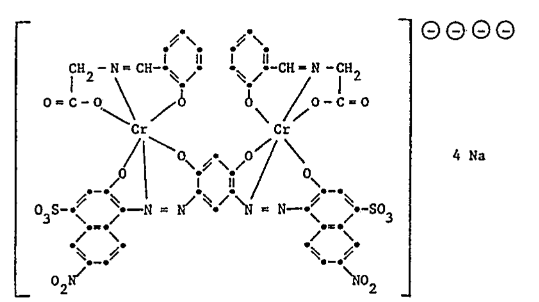

Der durch Eindampfen zur Trockne isolierte Farbstoff ergibt auf Leder unterschiedlicher Qualität lichtechte olivgraue bis schwarze Nuancen.

*Färbevorschrift für Leder*

100 Teile Bekleidungsveloursleder (Trockengewicht) werden bei 50° in einer Lösung von 1000 Vol.-Teilen Wasser und 2 Teilen Ammoniak 24%ig während 2 h aufgewalkt und anschliessend bei 60° in einer Lösung von 1000 Vol.-Teilen Wasser, 2 Teilen Ammoniak 24%ig und 6 Teilen Farbstoff aus Beispiel 1 während 1 h gefärbt. Hierauf gibt man eine Lösung von 40 Vol.-Teilen Wasser und 4 Teilen Ameisensäure 85%ig zu und färbt noch weitere 30 min. Dann werden die Leder gut gespült und ggf. noch mit 2 Teilen eines Dicyandiamidformaldehydkondensationsproduktes während 30 min bei 50° behandelt.

In gleicher Weise lassen sich andere Velourseder sowie Handschuhleder färben.

Die so erhaltenen schwarzen Färbungen zeichnen sich durch allgemein gute Echtheiten und sehr gutes Deckvermögen aus.

**Patentansprüche**

1. Chromkomplexfarbstoffe der Formel (I):

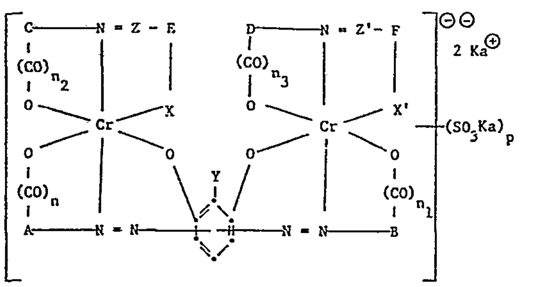

(I)

worin:

Z und Z' unabhängig voneinander je Stickstoff oder eine –CH-Gruppe,

X und X' unabhängig voneinander je Sauerstoff oder eine Gruppe der Formel –NR–, worin R Wasserstoff oder $C_1$-$C_4$-Alkyl bedeutet, wobei X bzw. X' Sauerstoff sein müssen, wenn Z bzw. Z' die CH-Gruppe bedeutet,

A und B unabhängig voneinander je den Rest einer Diazokomponente der Benzol- oder Naphthalinreihe, welcher die Hydroxy- oder Carboxygruppe in α-Stellung zur Azogruppe trägt,

C und D unabhängig voneinander je einen Rest der Benzol- oder Naphthalinreihe, welcher in o-Stellung zur Azo- oder Azomethingruppe eine Hydroxy- oder Carboxygruppe trägt, oder, falls $n_2$ und/oder $n_3$ = 1 ist und Z eine –CH-Gruppe darstellt, den Rest einer aliphatischen, cycloaliphatischen oder aromatischen Aminocarbonsäure,

E und F unabhängig voneinander je den Rest einer Kupplungskomponente, wenn Z Stickstoff ist, wobei die Kupplungskomponente in o- bzw. α-Stellung zur Azogruppe die Gruppe X und X' enthält oder den Rest eines o-Hydroxyaldehyds, wenn Z die –CH-Gruppe darstellt,

Y $C_1$-$C_4$-Alkyl oder Wasserstoff,

n, $n_1$, $n_2$ und $n_3$ unabhängig voneinander je 0 oder 1,

p eine ganze Zahl von 1 bis 6, und

$Ka^{\oplus}$ ein Kation bedeuten.

2. Chromkomplexfarbstoffe gemäss Anspruch 1, worin A, B, C und D unabhängig voneinander je der Rest eines 1-Hydroxy-2-aminobenzols ist, welcher ggf. durch Halogen, Nitro, Sulfo oder niedrigmolekulares Alkyl oder Alkoxy substituiert ist, oder der Rest eines 1-Amino-2-hydroxy-4-sulfonaphthalins, welcher ggf. in 6-Stellung durch Halogen, wie Brom oder insbesondere Chlor, Nitro oder Sulfo substituiert ist.

3. Chromkomplexfarbstoffe gemäss einem der Ansprüche 1 oder 2, worin Z oder Z' Stickstoff bedeuten und E unf F unabhängig voneinander je ein ggf. durch Amino und/oder Sulfo substituiertes 1- oder 2-Naphthol, 1- oder 2-Naphthylamin, ggf. substituiert durch Sulfo, p-Alkyl($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

4. Chromkomplexfarbstoffe gemäss einem der Ansprüche 1 oder 2, worin Z und/oder Z' eine CH-Gruppe bedeutet, wobei E und/oder F den Rest eines o-Hydroxybenzaldehyds oder o-Hydroxynaphthaldehyds darstellen, welcher durch niedrigmolekulares Alkyl, Halogen, Sulfo, Phenylazo, Sulfophenylazo, Naphthylazo, Sulfonaphthylazo oder Sulfophenylazophenylenazo substituiert sein kann.

5. Chromkomplexfarbstoffe gemäss einem der Ansprüche 1-4, worin n, $n_1$, $n_2$ und $n_3$ jeweils 0 bedeuten.

6. Chromkomplexfarbstoffe gemäss einem der Ansprüche 1-5, worin p 2, 3 oder 4 bedeutet und die Sulfogruppen in den Resten A, B, C, D, E und F angeordnet sind.

7. Chromkomplexfarbstoffe gemäss einem der Ansprüche 1-6, worin Y Wasserstoff bedeutet.

8. Chromkomplexfarbstoffe der Formel (II):

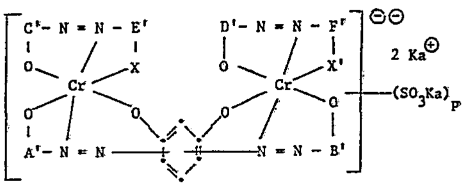

(II)

worin:

X und X' unabhängig voneinander Sauerstoff oder eine Gruppe der Formel –NR–, worin R Wasserstoff oder $C_1$-$C_4$-Alkyl darstellt, A', B', C' und D' unabhängig voneinander je den Rest einer Diazokomponente der Benzol- oder Naphthalinreihe, welche die Hydroxygruppe in o-Stellung zur Azogruppe trägt,

E' und F' unabhängig voneinander je den Rest einer Kupplungskomponente, welche die Gruppe X bzw. X' in o- bzw. α-Stellung zur Azogruppe trägt,

p eine ganze Zahl von 2 bis 4, und

$Ka^{\oplus}$ ein Kation bedeutet.

9. Chromkomplexfarbstoffe gemäss Anspruch 8, worin A', B', C' und D' unabhängig voneinander je der Rest eines 1-Hydroxy-2-aminobenzols ist, welcher ggf. durch Halogen, Nitro, Sulfo oder niedrigmolekulares Alkyl oder Alkoxy substituiert ist, oder der Rest eines 1-Amino-2-hydroxy-4-sulfonaphthalins, welcher ggf. in 6-Stellung durch Halogen, wie Brom oder insbesondere Chlor, Nitro oder Sulfo substituiert ist.

10. Chromkomplexfarbstoffe gemäss einem der Ansprüche 8 oder 9, worin E' und F' unabhängig voneinander je ein ggf. durch Amino und/oder Sulfo substituiertes 1- oder 2-Naphthol, 1- oder 2-Naphthylamin, ggf. substituiert durch Sulfo, p-Alkyl($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

11. Verfahren zur Herstellung von Chromkomplexfarbstoffen der Formel (I), dadurch gekennzeichnet, dass man ein Mol eines Farbstoffes der Formel (III):

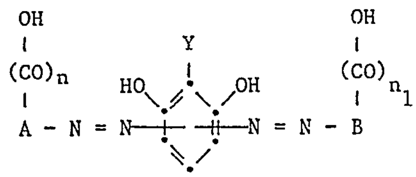

(III)

in den zweifachen 1:1-Chromkomplex umwandelt und diesen dann mit 2 mol eines Farbstoffes der Formel (IV):

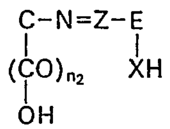

(IV)

und/oder eines Farbstoffes der Formel (V):

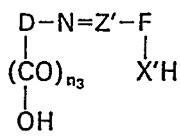

(V)

umsetzt oder vorzugsweise indem man zunächst einen Farbstoff der Formel (IV) und/oder (V) zum 1:1-Chromkomplex überführt und 2 mol von diesem dann mit einem Mol des nicht chromierten Farbstoffes der Formel (III) in den zweifachen 1:2-Chromkomplex umwandelt, wobei A, B, C, D, E, F, Z, Z', X, X', Y, n, $n_1$, $n_2$ und $n_3$ die unter der Formel (I) angegebene Bedeutung aufweisen.

12. Verfahren zum Färben von Stickstoff- und Hydroxygruppen enthaltenden Materialien, insbesondere von Wolle oder Polyamid und vor allem Leder, unter Verwendung der gemäss den Ansprüchen 1-10 definierten bzw. gemäss Anspruch 11 erhaltenen Chromkomplexfarbstoffe.

## Claims

1. A chronium complex dye of the Formula (I):

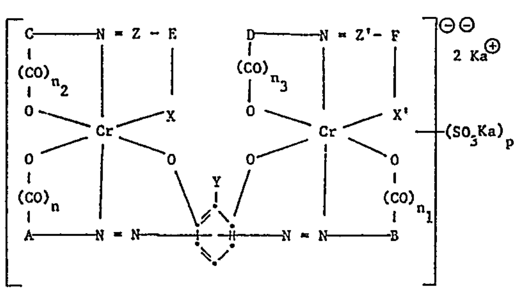

(I)

in which each of Z and Z' independently of the other is nitrogen or a −CH group, each of X and X' independently of the other is oxygen or a group of the formula −NR−, in which R is hydrogen or $C_1$-$C_4$alkyl, with the proviso that X must be oxygen if Z is the −CH group and X' must be oxygen if Z' is the −CH group, each of A and B independently of the other is the radical of a diazo component of the benzene or naphthalene series, which radical carries the hydroxy or carboxyl group in the o-position relativ to the azo group, each of C and D independently of the other is a radical of the benzene or naphthalene series, which radical carries a hydroxyl or carboxyl group in the o-position relative to the azo or azomethine group, or, if $n_2$ and/or $n_3$ is 1 and Z is a −CH group, the radical of an aliphatic, cycloaliphatic or aromatic aminocarboxylic acid, each of E and F independently of the other is the radical of a coupling component if Z is nitrogen, said coupling component containing the group X in the o-position and the group X' in the α-position relative to the azo group, or the radical of an o-hydroxyaldehyde if Z is the −CH group, Y is $C_1$-$C_4$alkyl or hydrogen, each of n, $n_1$, $n_2$ and $n_3$ independently is 0 or 1, p is an integer from 1 to 6, and $Ka^{\oplus}$ is a cation.

2. A chromium complex dye according to Claim 1, in which each of A, B, C and D independently is the radical of a 1-hydroxy-2-aminobenzene, which radical is unsubstituted or substituted by halogen, nitro, sulfo or low molecular alkyl or alkoxy, or is the radical of a 1-amino-2-hydroxy-4-sulfonaphthalene, which radical is unsubstituted or substituted in the 6-position by halogen, such as bromine or, in particular, chlorine, or by nitro or sulfo.

3. A chromium complex dye according to either of Claims 1 or 2, in which Z or Z' is nitrogen and each of E and F independently of the other is unsubstituted or amino- and/oder sulfo-substituted 1- or 2-naphthol, 1- or 2-naphthylamine which is unsubstituted or substituted by sulfo, p-($C_1$-$C_6$)-alkylphenol, 1-phenyl-3-methyl-5-pyrazolone or acetoacetanilide, and the phenyl group in the two last-mentioned compounds may be substituted by $C_1$-$C_4$alkyl, $C_1$-$C_4$alkoxy, chlorine or sulfo.

4. A chromium complex dye according to either of Claims 1 or 2, in which Z and/or Z' is a CH group and E and/or F is the radical of an o-hydroxybenzaldehyde or o-hydroxynaphthaldehyde, which radical may be substituted by low molecular alkyl, halogen, sulfo, phenylazo, sulfophenylazo, naphthylazo, sulfonaphthylazo or sulfophenylazophenyleneazo.

5. A chromium complex dye according to any one of Claims 1 to 5, in which each of n, $n_1$, $n_2$ and $n_3$ is 0.

6. A chromium complex dye according to any one of Claims 1 to 6, in which p is 2, 3 or 4 and the sulfo groups are arranged in the radical A, B, C, D, E and F.

7. A chromium complex dye according to any one of Claims 1 to 7, in which Y is hydrogen.

8. A chromium complex dye of the Formula (II):

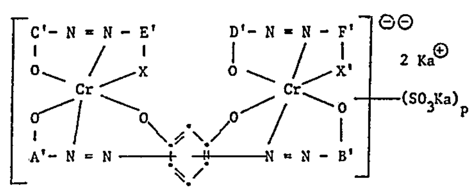

(II)

in which each of X and X' independently of the other is oxygen or a group of the formula −NR−,

in which R is hydrogen or $C_1$-$C_4$alkyl, each of A', B', C' and D' independently is the radical of a diazo component of the benzene or naphthalene series, which component carries the hydroxyl group in the o-position relative to the azo group, each of E' and F' independently of the other is the radical of a coupling component which carries the group X in the o-position and the group X' in the α-position relative to the azo group, p is an integer from 2 to 4, and $Ka^{\oplus}$ is a cation.

9. A chromium complex dye according to Claim 8, in which each of A', B', C' and D' is the radical of a 1-hydroxy-2-aminobenzene which is unsubstituted or substituted by halogen, nitro, sulfo or low molecular alkyl or alkoxy, or is the radical of a 1-amino-2-hydroxy-4-sulfonaphthalene which is unsubstituted or substituted in the 6-position by halogen, such as bromine or, in particular, chlorine, or by nitro or sulfo.

10. A chromium complex dye according to either of Claims 8 or 9, in which each of E' and F' independently of the other is unsubstituted or amino- and/or sulfo-substituted 1- or 2-naphthol, 1- or 2-naphthylamine which is unsubstituted or substituted by sulfo, p-($C_1$-$C_6$)alkylphenol, 1-phenyl-3-methyl-5-pyrazolone or acetoacetanilide, and the phenyl group in the two last-mentioned compounds may be substituted by $C_1$-$C_4$alkyl, $C_1$-$C_4$-alkoxy, chlorine or sulfo.

11. A process for the preparation of a chromium complex dye of the Formula (I), which comprises converting one mole of a dye of the Formula (III):

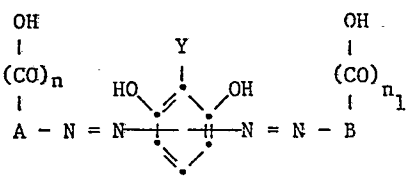

(III)

into the twofold 1:1 chromium complex, and then reacting this chromium complex with 2 mol of a dye of the Formula (IV):

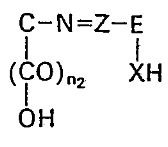

(IV)

and/or a dye of the Formula (V):

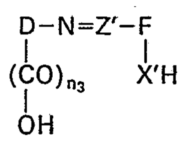

(V)

or, preferably, first converting a dye of the Formula (IV) and/or (V) into the 1:1 chromium complex and then converting 2 mol of this chromium complex with one mole of unchromed dye of the Formula (III) into the twofold 1:2 chromium complex, in which formulae A, B, C, D, E, F, Z, Z', X, X', Y, n, $n_1$, $n_2$ and $n_3$ are as defined for Formula (I).

12. A method of dyeing nitrogen- and hydroxyl-containing materials, in particular wool or polyamide and especially leather, which method comprises the use of a chromium complex dye as defined in any one of Claims 1 to 10 or obtained according to Claim 11.

**Revendications**

1. Colorants complexes de chrome répondant à la formule (I):

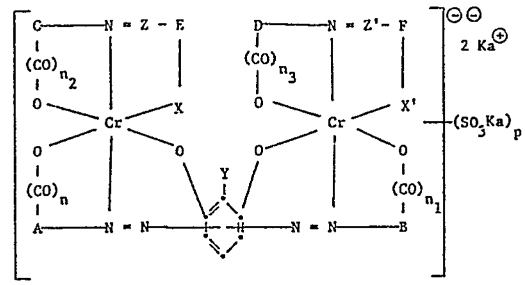

(I)

dans laquelle:

Z et Z' désignent indépendamment l'un de l'autre l'azote ou un groupe −CH−,

X et X' désignent indépendamment l'un de l'autre l'oxygène ou un groupe répondant à la formule −NR−, où R désigne l'hydrogène ou un groupe alkyle en $C_1$-$C_4$, X ou X' devant être l'oxygène, lorsque Z ou Z' désignent le groupe −CH−, respectivement,

A et B désignent indépendamment l'un de l'autre le radical d'un constituant diazoïque de la série du benzène ou du naphtalène, qui porte le groupe hydroxy ou carboxy en position ortho par rapport au groupe azo,

C et D désignent indépendamment l'un de l'autre un radical de la série du benzène ou du naphtalène, qui porte en position ortho par rapport au groupe azo ou azométhine un groupe hydroxy ou carboxy, ou, si $n_2$ et/ou $n_3$ est égal à 1 et Z désigne un groupe −CH−, le radical d'un acide aminocarboxylique aliphatique, cycloaliphatique ou aromatique,

E et F désignent indépendamment l'un de l'autre le radical d'un constituant de copulation, lorsque Z est l'azote, le constituant de copulation contenant le groupe X ou X' en position ortho ou alpha par rapport au groupe azo, ou le radical d'un o-hydroxyaldéhyde, lorsque Z désigne le groupe −CH−,

Y désigne un radical alkyle en $C_1$-$C_4$ ou l'hydrogène,

n, $n_1$, $n_2$ et $n_3$ désignent indépendamment l'un de l'autre 0 ou 1,

p est un nombre entier de 1 à 6, et

$Ka^{\oplus}$ un cation.

2. Colorants complexes de chrome selon la revendication 1, dans lesquels A, B, C et D désignent indépendamment les uns des autres le radical d'un 1-hydroxy-2-aminobenzène, qui est, le cas échéant, substitué par un halogène, un groupe nitro, sulfo, ou alkyle ou alcoxy de faible masse moléculaire, ou est le radical d'un 1-amino-2-hydroxy-4-sulfonaphtalène, qui est substitué le cas échéant en position 6 par un halogène, tel que

le brome ou en particulier le chlore, un groupe nitro ou sulfo.

3. Colorants complexes de chrome selon l'une des revendications 1 ou 2, dans lesquels Z ou Z' désignent l'azote et E et F sont indépendamment l'un de l'autre un 1- ou 2-naphtolamino et/ou sulfo substitué, une 1- ou 2-naphtylamine substituée le cas échéant par un groupe sulfo, un p-(alkyl en $C_1$-$C_6$)-phénol, une 1-phényl-3-méthyl-5-pyrazolone ou l'acétoacétanilide, le groupe phényle pouvant être substitué dans les deux derniers composés par un groupe alkyle en $C_1$-$C_4$, alcoxy en $C_1$-$C_4$, le chlore ou un groupe sulfo.

4. Colorants complexes de chrome selon l'une des revendications 1 ou 2, dans lesquels Z et/ou Z' désignent un groupe CH−, E et/ou F désignant le radical de l'o-hydroxybenzaldéhyde ou de l'o-hydroxynaphthaldéhyde, qui peut être substitué par un groupe alkyle de faible masse moléculaire, par un halogène, un groupe sulfo, phénylazo, sulfophénylazo, naphtylazo, sulfonaphtylazo, ou sulfophénylazophénylénazo.

5. Colorants complexes de chrome selon l'une des revendications 1 à 4, dans lesquels n, $n_1$, $n_2$ et $n_3$ désignent chacun O.

6. Colorants complexes de chrome selon l'une des revendications 1 à 5, dans lesquels p désigne 2, 3 ou 4 et les groupes sulfo sont placés dans les radicaux A, B, C, D, E et F.

7. Colorants complexes de chrome selon l'une des revendications 1 à 6, dans lesquels Y désigne l'hydrogène.

8. Colorants complexes de chrome répondant à la formule (II):

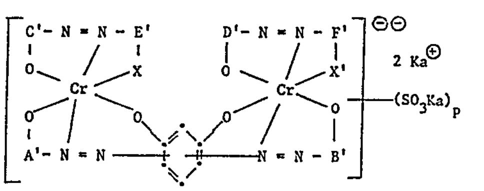

(II)

dans laquelle:

X et X' désignent indépendamment l'un de l'autre l'oxygène ou un groupe répondant à la formule −NR−, dans laquelle R représente l'hydrogène ou un alkyle en $C_1$-$C_4$, A', B', C' et D' sont indépendamment l'un de l'autre chacun le radical d'un constituant diazoïque de la série du benzène ou du naphtalène, qui porte le groupe hydroxy en position ortho par rapport au groupe azo,

E' et F' sont indépendamment l'un de l'autre chacun le radical d'un constituant de copulation, qui porte le groupe X ou X' en position ortho ou alpha par rapport au groupe azo,

p est un nombre entier de 2 à 4, et

$Ka^{\oplus}$ désigne un cation.

9. Colorants complexes de chrome selon la revendication 8, dans lesquels A', B', C' et D' sont indépendamment les uns des autres le radical d'un 1-hydroxy-2-aminobenzène, qui est substitué le cas échéant par un halogène, un groupe nitro, sulfo ou alkyle ou alcoxy de faible masse moléculaire, ou le radical d'un 1-amino-2-hydroxy-4-sulfonaphtalène, qui est substitué le cas échéant en position 6 par un halogène tel que le brome ou en particulier le chlore, un groupe nitro ou sulfo.

10. Colorants complexes de chrome selon l'une des revendications 8 ou 9, dans lesquels E' et F' désignent indépendamment l'un de l'autre un 1- ou 2-naphtol amino et/ou sulfo substitué, une 1- ou 2-naphtylamine, substituée le cas échéant par un groupe sulfo, un p-(alkyl en $C_1$-$C_6$)-phénol, une 1-phényl-3-méthyl-5-pyrazolone ou l'acétoacétonilide, le groupe phényle pouvant être substitué dans les deux derniers composés par un groupe alkyle en $C_1$-$C_4$, alcoxy en $C_1$-$C_4$, le chlore ou un groupe sulfo.

11. Procédé de préparation de colorants complexes de chrome, caractérisé en ce que l'on transforme une mole du colorant de formule (III):

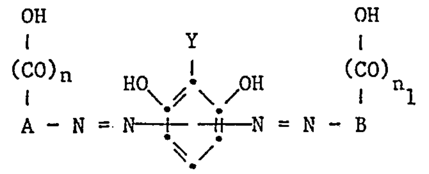

(III)

en le complexe double de chrome 1:1 et en faisant réagir celui-ci avec 2 moles d'un colorant répondant à la formule (IV):

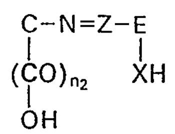

(IV)

et/ou d'un colorant répondant à la formule (V):

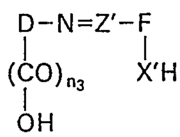

(V)

ou, de préférence en transformant d'abord un colorant répondant à la formule (IV) et/ou (V) en le complexe de chrome 1:1, et en transformant ensuite 2 moles de celui-ci avec une mole du colorant non chromé répondant à la formule (III) en le complexe de chrome 1:2 double, A, B, C, D, E, F, Z, Z', X, X', Y, n, $n_1$, $n_2$ et $n_3$ ayant la signification indiquée à propos de la formule (I).

12. Procédé de teinture de matières contenant de l'azote ou des groupes hydroxy, en particulier de la laine ou des polyamides et principalement du cuir, en utilisant des colorants complexes de chrome définis conformément aux revendications 1 à 10 ou obtenus conformément à la revendication 11.